# EUROPÄISCHE PATENTSCHRIFT

(11) **EP 1 081 019 B1**
(45) Veröffentlichungstag und Bekanntmachung des Hinweises auf die Patenterteilung: **03.03.2004**
(21) Anmeldenummer: 00117218.8
(22) Anmeldetag: 11.08.2000
(51) Int. Cl.: B62D 7/18, B60T 1/06

(54) **Achsbaugruppe insbesondere für eine lenkbare Achse eines Kraftfahrzeuges**
Assembly for axle, especially for a steerable axle of a motor vehicle
Ensemble pour essieu, notamment pour essieu directeur d'un véhicule automobile

(30) Priorität: 03.09.1999 DE 19942238; 30.09.1999 DE 19946891
(43) Veröffentlichungstag der Anmeldung: 07.03.2001
(73) Patentinhaber: Continental Teves AG & Co. oHG, 60488 Frankfurt (DE)
(72) Erfinder: Rückert, Helmut, 64354 Reinheim (DE); Teitge, Hilmar, 60325 Frankfurt am Main (DE); Heinz, Christian, 63589 Altenhasslau (DE)

(56) Entgegenhaltungen:
- DE-A- 4 303 417
- DE-A- 19 538 212
- US-A- 4 618 159

## Beschreibung

Die vorliegende Erfindung betrifft eine mehrteilige Achsbaugruppe, insbesondere für eine lenkbare Achse eines Kraftfahrzeuges nach dem Oberbegriff des Patentanspruchs 1.

Eine derartige Achsbaugruppe ist aus der DE 195 38 212 A1 bekannt. Die dort beschriebene Achsbaugruppe hat einen Achsschenkel aus einem ersten Material, der Anlenkstellen zur Befestigung von Radaufhängungs- oder Lenkungselementen aufweist sowie ein Kombinationsbauteil, das aus einem zweiten, von dem ersten Material verschiedenen Material besteht und das ein Radlagergehäuse und eine Bremsabstützung umfaßt. Das Kombinationsbauteil und der Achsschenkel haben je eine ebene, senkrecht zu einer Radachse angeordnete Stirnfläche, wobei die Stirnflächen einander zugewandt sind und das Kombinationsteil und der Achsschenkel über die Stirnflächen aneinander befestigt sind. Da die bei Bremsungen auftretenden Umfangskräfte vom Kombinationsbauteil aufgenommen werden, ist eine sehr stabile und haltbare Verbindung von Achsschenkel und Kombinationsbauteil notwendig. Dies erfordert bei ebener Gestaltung der Stirnflächen eine massive Ausführung der Verbindungselemente, vorzugsweise der Verbindungsschrauben, bzw. des Achsschenkels sowie des Kombinationsbauteiles, um die auftretenden Bremskräfte bzw. - momente insbesondere im Reversierbetrieb sicher übertragen zu können. Daraus resultiert für die gesamte Achsbaugruppe wiederum eine unerwünschte Kosten- und Gewichtszunahme. Eine deratige Achsbaugruppe ist auch aus der US-A-4 618 159 bekannt.

Davon ausgehend liegt der Erfindung die Aufgabe zugrunde, eine mehrteilige Achsbaugruppe bereitzustellen, die bei kostengünstiger Herstellung möglichst leicht ist und dennoch eine ausreichende Stabilität aufweist, insbesondere hinsichtlich der Übertragung von Bremsumfangskräften.

Gelöst wird die Aufgabe erfindungsgemäß durch die Merkmalskombination des Patentanspruches 1. Danach umfaßt die mehrteilige Achsbaugruppe, insbesondere für eine lenkbare Achse eines Kraftfahrzeuges, einen Achsschenkel, der Anlenkstellen zur Befestigung von Radaufhängungs-, Lenkungs- oder sonstigen Achselementen aufweist, sowie einen Integralträger, in den ein Radlagergehäuse und eine Bremsabstützung integriert sind und der die bei Bremsungen auftretenden Umfangskräfte aufnimmt. Der Achsschenkel und der Integralträger haben je eine im wesentlichen senkrecht zur Radachse angeordnete Anlagefläche, die einander zugewandt sind und über die der Achsschenkel mit dem Integralträger drehfest miteinander lösbar verbunden sind. Zur sicheren Übertragung der bei Bremsungen auftretenden Bremsumfangskräfte und - momente ist im montierten Zustand der mehrteiligen Achsbaugruppe an den Anlageflächen von Achsschenkel und Integralträger eine formschlüssige Verbindung ausgebildet. Dadurch wird eine in Umfangsrichtung drehfeste Verbindung von Achsschenkel und Integralträger erreicht die keine zusätzlichen Maßnahmen an den Verbindungselementen, insbesondere den Verbindungsschrauben erfordert und sich somit günstig auf das Gesamtgewicht der Achsbaugruppe auswirkt. Eine derartige, formschlüssige Verbindung kann beispielsweise durch Ausbildung eines axialen Vorsprunges an der einen Anlageflächen sowie Ausbildung einer komplementären Ausnehmung an der zugehörigen anderen Anlagefläche realisiert werden.

Gemäß einer vorteilhaften Weiterbildung der Erfindung wird zwischen den beiden Anlageflächen ein 'microaxialer Formschluß' ausgebildet, indem an zumindest einer Anlageflächen durch Oberflächenaufrauhung, durch geeignete Zwischenlagen, durch Einbringen zusätzlicher Stoffe in Pulverform bzw. sonstige Behandlung der Oberflächenfeingestalt der Reibwert gezielt erhöht wird. Dies geschieht vorzugsweise durch Behandlung zumindest einer Anlagefläche mittels eines Strahlmediums bzw. Strahlverfahrens (z. B. Sandstrahlen, Kugelstrahlen etc.). Analog dazu ist es möglich, auf zumindest einer der Anlageflächen eine gezielt ausgelegte Kerbverzahnung, eine radiale Rillenanordnung (z. B. Rändelung) oder vergleichbare Maßnahmen zur Änderung der Oberflächenfeingestalt vorzusehen. Insgesamt wird durch die genannten Oberflächenbearbeitungsverfahren zwischen den beiden Anlageflächen eine formschlüssige Verbindung in der Art einer 'Kleinstverzahnung' erzeugt, die den Integralträger in Umfangsrichtung drehfest an den Achsschenkel koppelt.

Allgemein ist bei der Oberflächenbearbeitung zur gezielten Reibwerterhöhung zu beachten, daß sie an der Anlagefläche des Bauteiles, d. h. Achsschenkel oder Integralträger, mit hoherer Werkstoffhärte vorgenommen wird. Im montierten Zustand der Achsbaugruppe kann sich dann die Oberflächenstruktur der Anlagefläche mit höherer Werkstoffhärte in die Anlagefläche mit geringerer Werkstoffhärte 'eindrücken'. Vorzugsweise wird dabei der Integralträger aus einem Material hoher Werkstoffhärte (z. B. Sphäroguß, Kugelgraphitguß) gefertigt, da er aufgrund der Aufnahme der Bremsumfangskräfte sowie Radlagerkräfte ohnehin einer großen Belastung ausgesetzt ist und somit eines hochwertigen Werkstoffes bedarf. Ferner sollte das Oberflächenbearbeitungsverfahren derart ausgewählt werden, daß für die montierte Achsbaugruppe kein nachteiliges 'Setzen' in axialer Richtung auftritt.

Weitere erfindungsgemäße Gestaltungsmerkmale werden an einem Auführungsbeispiel in der Figur dargestellt und im folgenden näher erläutert.

Es zeigt:

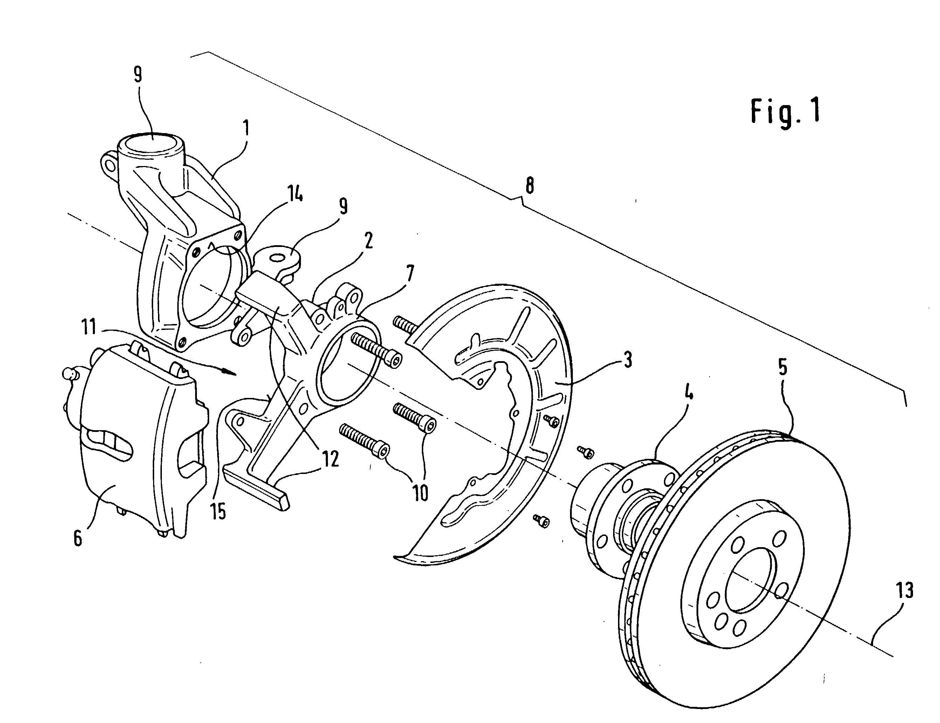

- Figur 1: eine räumliche Explosionsdarstellung einer mehrteiligen Achsbaugruppe.

Die in Figur 1 dargestellte mehrteilige Achsbaugruppe, für eine lenkbare Kraftfahrzeugachse umfaßt im wesentlichen einen Achsschenkel 1, einen Integralträger 2, ein Abdeckblech 3, ein Radlager 4, eine Bremsscheibe 5 sowie eine Radbremse 6. Diese Einzelbauteile sind üblicherweise mittels Verbindungselementen lösbar zusammengefügt und bilden eine eigenständig handhabbare, vormontierte Einheit, ein sogenanntes 'Corner-Modul' 8. Der Aufbau des Corner-Modules 8 aus mehreren Einzelteilen gestattet die zielgerichtete Auslegung dieser Einzelteile, insbesondere auch hinsichtlich ihrer Werkstoffe. Bei funktionsgerechtem Werkstoffeinsatz für die einzelnen Komponenten des Corner-Modules 8 eröffnet sich somit ein möglicher Gewichtsvorteil. Weiterhin ergibt sich durch die Gestaltung des Corner-Modules aus Einzelkomponenten ein Baukastenprinzip, das eine anforderungsgerechte Konstruktion der Einzelkomponenten wie auch des Gesamtmodules zuläßt und damit Kostenvorteile bringt.

Im einzelnen besitzt der vorzugsweise aus Aluminium gefertigte Achsschenkel 1 Anlenkstellen 9 zur Aufnahme bzw. Befestigung von Radaufhängungs- (z. B. Federbein), Lenkungs- (z. B. Kugelgelenk für die Spurstange, ggf. unteres Kugelgelenk) oder sonstigen Achs-/Corner-Komponenten. Am Achsschenkel 1 ist ein vorzugsweise aus Sphäroguß gefertigter Integralträger 2 insbesondere mittels mehrerer Verbindungsschrauben 10 lösbar befestigt. Dabei sind in den einteiligen Integralträger 2 ein Radlagergehäuse 7 sowie eine Bremsabstützung 11 integriert. Die Bremsabstützung 11 umfaßt zwei die Bremsscheibe 5 axial überragende Trägerarme 12, die zur Anlage der als Schwimmsattel-Scheibenbremse 6 ausgebildeten Radbremse dienen und die bei Bremsungen auftretenden Umfangskräfte aufnehmen sowie auf den Achsschenkel 1 übertragen. Das Radlagergehäuse 7 nimmt ein Radlager 4 auf, das andererseits ebenso wie die Bremsscheibe 5 mit der drehbaren Radachse drehfest verbunden ist. Zur Abschirmung speziell der Kugelgelenke, insbesondere gegen Wärme, Schmutz, Feuchtigkeit sowie andere Bauteile, ist noch ein Abdeckblech 3 vorgesehen, das am Integralträger 2 verschraubt ist.

Allgemein weisen der Achsschenkel 1 und der Integralträger 2 eine im wesentlichen senkrecht zur Radachse 13 angeordnete Schnittstelle auf, die durch je eine Anlagefläche 14, 15 des Achsschenkels 1 und des Integralträgers 2 gebildet wird. Über diese einander zugewandten Anlageflächen 14, 15 müssen das Bremsmoment die daraus resultierenden Bremsumfangskräfte im montierten Zustand des Corner-Modules 8 übertragen werden. Um diese Kräfte bzw. Momente übertragen zu können, sind die Anlageflächen 14, 15 formschlüssig miteinander verbunden. Dieser Formschluß wird vorzugsweise durch eine Oberflächenbearbeitung an zumindest einer der Anlageflachen 14, 15 umgesetzt. Dazu wird die Oberflächenfeingestalt der Anlageflächen 14, 15 im Sinne einer Oberflächenaufrauhung zur Reibwerterhöhung verändert. Dadurch wird ein 'microaxialer' Formschluß zwischen der Anlagefläche 14 des Achsschenkels 1 und der zugehörigen Anlagefläche 15 des Integralträgers 2 erzielt. Dies ermöglicht eine drehfeste Verbindung von Achsschenkel 1 und Integralträger 2 im montierten Zustand des Corner-Modules 8 bei relativ klein dimensionierter Vorspannkraft durch die Verbindungsschrauben 10. Somit können die Verbindungsschrauben 10 wie auch der Achsschenkel 1 und der Integralträger 2 hinsichtlich des Gewichtes gewünschtermaßen klein bzw. schlank ausgelegt werden.

Realisiert wird der microaxiale Formschluß zwischen den Anlagenflächen 14, 15 beispielsweise durch Behandlung zumindest einer der Anlageflächen 14, 15 mit einem Strahlmedium bzw. Strahlverfahren (z. B. Sandstrahlen etc.). Weiterhin kann auch eine gezielt ausgelegte Kerbverzahnung, die Anordnung von im wesentlichen radial verlaufenden Rillen (z. B. Randelung) oder eine sonstige Änderung der Oberflächenfeingestalt an wenigstens einer Anlagefläche 14, 15 zur gewunschten Erhöhung des Reibwertes zwischen Achsschenkel 1 und Integralträger 2 führen. Analog dazu ist es denkbar, zwischen den Anlageflächen 14, 15 Zwischenlagen bzw. Zusatzstoffe in Pulverform vorzusehen, einen entsprechenden Formschluß zu erzeugen.

Dabei ist zu beachten, daß das Oberflächenbearbeitungsverfahren zur Reibwerterhöhung vorteilhaft an der Anlagefläche 14, 15 desjenigen Bauteiles, d. h. Achsschenkel 1 oder Integralträger 2, ausgeführt wird, das die höhere Werkstoffhärte aufweist. Dadurch kann die aufgerauhte Oberflächenfeingestalt ausgehend von der Anlagefläche 14, 15 des härteren Bauteiles in die Anlagefläche 15, 14 des Bauteiles mit geringerer Härte eingedrückt werden. Vorzugsweise wird der Integralträger 2 in der Praxis aus einem härteren Werkstoff (z. B. Sphäroguß, Kugelgraphitguß) gefertigt als der Achsschenkel 1 (z. B. Aluminium), da der Integralträger 2 aufgrund der hohen Belastungen durch die Brems- und Radlagerkräfte ohnehin eines hochwertigen Materials bedarf. Ferner ist das Oberflächenbearbeitungsverfahren derart zielgerichtet zu wählen, daß im montierten Zustand des Corner-Modules 8 kein axiales 'Setzen' auftritt.

Analog zum beschriebenen 'microaxialen' Formschluß läßt sich selbstverständlich auch ein nicht dargestellter, größer dimensionierter Formschluß zwischen den Anlageflächen 14, 15 umsetzen. Dies kann beispielsweise durch Ausbildung zumindest eines Vorsprunges an der einen Anlagefläche 14, 15 sowie durch Ausbildung einer komplementären Ausnehmung an der den zugehörigen, anderen Anlagefläche 15, 14 erreicht werden.

## Patentansprüche

1. Achsbaugruppe, insbesondere für eine lenkbare Achse eines Kraftfahrzeuges, mit:
- einem Achsschenkel (1), der Anlenkstellen (9) zur Befestigung von Radaufhängungs-, Lenkungs- oder sonstigen Achselementen aufweist,
- - einem ein Radlagergehäuse (7) und eine Bremsabstützung (11) umfassenden Integralträger (2), der die bei Bremsungen auftretenden Umfangskräfte aufnimmt, und
- je einer Anlagefläche (14, 15) am Achsschenkel (1) und am Integralträger (2), die einander zugewandt .sind und über die Achsschenkel (1) und Integralträger (2) lösbar miteinander verbunden sind,
**dadurch gekennzeichnet, daß** im montierten Zustand der Achsbaugruppe die Anlageflächen (14, 15) eine formschlüssige Verbindung oder eine reibschlissige Verbindung mit gesielte Erhöhung des Reibwerts durch Behandlung der Oberflächenfeinstruktur aus bilden.

2. Achsbaugruppe nach Anspruch 1, **dadurch gekennzeichnet, daß** an zumindest einer Anlagefläche (14, 15 ) durch Oberflächenaufrauhung bzw. Änderung der Oberflächenfeingestalt der Reibwert gezielt erhöht ist.

3. Achsbaugruppe nach einem der vorhergehenden Ansprüche, **dadurch gekennzeichnet, daß** zwischen den einander zugehorigen Anlageflächen (14, 15) eine Verzahnung ausgebildet ist.

4. Achsbaugruppe nach Anspruch 2 , **dadurch gekennzeichnet, daß** zumindest eine Anlagefläche (14, 15) mit radialen Rillen versehen ist.

5. Achsbaugruppe nach einem der vorhergehenden Ansprüche, **dadurch gekennzeichnet, daß** Achsschenkel (1) und Integralträger (2) aus unterschiedlichen Materialien gefertigt sind.

6. Achsbaugruppe nach Anspruch 5 , **dadurch gekennzeichnet, daß** die Oberflächenaufrauhung bzw. Änderung der Oberflächenfeingestalt an der Anlagefläche (14, 15) desjenigen Bauteiles (Achsschenkel (1) oder Integralträger (2)) vorgesehen ist, welches aus dem Material höherer Werkstoffhärte besteht.

## Claims

1. Steering knuckle assembly, in particular for a steerable axle of a motor vehicle, comprising:
- a steering knuckle (1) including pivotal points (9) for attaching wheel suspension elements, steering elements, or other axle elements,
- an integral support member (2) comprising a wheel bearing housing (7) and a brake support (11) and accommodating the circumferential forces that develop in braking operations, and
- each one abutment surface (14, 15) on the steering knuckle (1) and on the integral support member (2) that face each other and are detachably interconnected by way of the steering knuckles (1) and integral support members (2),
**characterized in that** in the assembled condition of the steering knuckle assembly, the abutment surfaces (14, 15) provide a form-locking connection or a frictional connection with a purposeful increase in the coefficient of friction by treatment of the fine structure of the surfaces.

2. Steering knuckle assembly as claimed in claim 1,
**characterized in that** the coefficient of friction is purposefully increased on at least one abutment surface (14, 15) by roughening the surface or changing the surface fineness.

3. Steering knuckle assembly as claimed in any one of the preceding claims,
**characterized in that** a toothed system is designed between the associated abutment surfaces (14, 15).

4. Steering knuckle assembly as claimed in claim 2,
**characterized in that** at least one abutment surface (14, 15) includes radial grooves.

5. Steering knuckle assembly as claimed in any one of the preceding claims,
**characterized in that** steering knuckle (1) and integral support member (2) are made of different materials.

6. Steering knuckle assembly as claimed in claim 5,
**characterized in that** roughening of the surface or changing the surface fineness is provided on the abutment surface (14, 15) of that component (steering knuckle (1) or integral support member (2)) which is made of the material with a higher degree of hardness.

## Revendications

1. Ensemble pour essieu, notamment pour essieu directeur d'un véhicule automobile, comportant :
- une branche d'essieu (1) qui présente des points d'articulation (9) pour la fixation d'éléments de suspension des roues, de direction ou d'autres éléments d'essieu,
- un support monobloc (2) qui comprend un carter de support de roue (7) et un appui de frein (11) et qui absorbe les forces périphériques survenant pendant les freinages, et
- des surfaces de contact (14, 15), une sur la branche d'essieu (1) et une sur le support monobloc (2), qui sont tournées l'une vers l'autre et reliées entre elles de manière séparable par la branche d'essieu (1) et le support monobloc (2),
**caractérisé en ce qu'**à l'état monté de l'ensemble pour essieu, les surfaces de contact (14, 15) forment une liaison par complémentarité de forme ou une liaison par friction avec augmentation contrôlée du coefficient de friction par traitement de la structure fine des surfaces.

2. Ensemble pour essieu selon la revendication 1, **caractérisé en ce qu'**on augmente le coefficient de friction, de manière contrôlée, par grattage superficiel ou modification de la structure fine de la surface.

3. Ensemble pour essieu selon l'une des revendications précédentes, **caractérisé en ce qu'**une denture est réalisée entre les surfaces de contact (14, 15) tournées l'une vers l'autre.

4. Ensemble pour essieu selon la revendication 2, **caractérisé en ce qu'**au moins une surface de contact (14, 15) est pourvue de gorges radiales.

5. Ensemble pour essieu selon l'une quelconque des revendications précédentes, **caractérisé en ce que** la branche d'essieu (1) et le support monobloc (2) sont réalisés en des matériaux différents.

6. Ensemble pour essieu selon la revendication 5, **caractérisé en ce que** le grattage superficiel ou la modification de la structure fine de la surface est prévu sur la surface de contact (14, 15) du composant (branche d'essieu (1) ou support monobloc (2)) qui est constitué du matériau présentant la plus grande dureté.
